# EUROPÄISCHE PATENTANMELDUNG

(11) **EP 4 648 205 A2**
(43) Veröffentlichungstag der Anmeldung: **12.11.2025**
(21) Anmeldenummer: 25175285.3
(22) Anmeldetag: 09.05.2025
(51) Int. Cl.: H01M 50/403, H01M 10/052, H01M 10/0562, H01M 10/0585, H01M 50/434, H01M 50/46, H01M 4/38

(54) **VERFAHREN ZUR HERSTELLUNG EINES FESTSTOFFSEPARATORS**

(30) Priorität: 10.05.2024 DE 102024204375
(71) Anmelder: PowerCo SE, 38239 Salzgitter (DE)
(72) Erfinder: Koch, Stephan, 38239 Salzgitter (DE); Kunze, Miriam, 38239 Salzgitter (DE)

(57) **Zusammenfassung**

Die Erfindung betrifft ein Verfahren (34) zur Herstellung eines Feststoffseparators (16). Eine Metallfolie (24) wird bereitgestellt, und auf die Metallfolie (24) werden mehrere Edukte (46) zum Ausbilden einer Mischung (50) aufgebracht. Auf die Mischung (50) wird eingewirkt, sodass die Edukte (46) miteinander reagieren und eine keramische Schicht (26) ausgebildet wird. Ferner betrifft die Erfindung ein Verfahren (32) zur Herstellung einer Feststoffbatterie (14) sowie eine Vorrichtung (36) zur Herstellung eines Feststoffseparators (16).

## Beschreibung

Die Erfindung betrifft ein Verfahren zur Herstellung eines Feststoffseparators und ein Verfahren zur Herstellung einer Feststoffbatterie. Ferner betrifft die Erfindung eine Vorrichtung zur Herstellung eines Feststoffseparators.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batteriemodule umfasst. Die Batteriemodule sind meist zueinander baugleich sowie miteinander elektrisch in Reihe und/oder parallel geschaltet, sodass die an der Hochvoltbatterie anliegende elektrische Spannung einem Vielfachen der mittels jedes der Batteriemodule bereitgestellten elektrischen Spannung entspricht. Jedes Batteriemodul wiederum umfasst mehrere Batterien, die meist in einem gemeinsamen Modulgehäuse angeordnet sind, und die miteinander elektrisch in Reihe und/oder parallel geschaltet sind.

Jede der Batterien wiederum umfasst üblicherweise mehrere galvanische Elemente. Diese weisen jeweils zwei Elektroden, nämlich eine Anode und eine Kathode, sowie einen dazwischen angeordneten Separator als auch einen Elektrolyten mit freibeweglichen Ladungsträgern auf. Als ein derartiger Elektrolyt wird beispielsweise eine Flüssigkeit herangezogen. Die Anode und die Kathode, die die Elektroden der Batterie bilden, umfassen üblicherweise einen Träger, der als Stromableiter fungiert. An diesem ist üblicherweise ein Aktivmaterial befestigt, das ein Bestandteil einer auf den Träger, der auch als Ableiter bezeichnet wird, aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Lithium-Ionen, geeignet. Je nach Verwendung als Anode oder Kathode wird ein anderes Material für den Träger und eine unterschiedliche Art des Materials der Schicht verwendet.

In einer Alternative ist die Batterie als Feststoffbatterie ausgestaltet, und der Elektrolyt liegt als Festkörper vor. In diesem Fall ist es möglich, den Separator sowie den Feststoffelektrolyt mittels einer gemeinsamen Schicht auszubilden, die auf einem der Stromableiter angeordnet ist. Dieser Stromableiter ist der Anode zugeordnet, und solange die Batterie nicht geladen ist, liegt die Schicht direkt an dem Stromableiter an. Bei einem Laden der Batterie lagern sich zwischen dem Stromableiter und der Schicht Arbeitsionen, wie Lithiumionen, an, die aus der Schicht austreten.

Üblicherweise wird zur Herstellung zunächst ein Grünling aus einem Feststoffelektrolytpulver hergestellt, der anschließend gesintert wird. Hierfür wird der Grünling erwärmt sowie verpresst. Die auf diese Weise hergestellte Keramikmembran, die die Schicht bildet, wird anschließend an einer Metallfolie, die als Stromableiter fungiert, befestigt. Nachteilig hieran ist, dass die Herstellung der Keramikmembran, nämlich das Erwärmen sowie das Verpressen, vergleichsweise energieintensiv ist, weswegen Herstellungskosten einer derartigen Batterie vergleichsweise hoch sind. Zudem ist es möglich, dass bei dem Erwärmen und dem Verpressen die Homogenität des Feststoffelektrolytpulvers lokal aufgehoben wird, sodass Defekte entstehen wie Korngrenzen, die eine Leistungsfähigkeit der Batterie herabsetzen. Diese tritt jedoch nicht in gleichem Maße bei allen auf diese Weise hergestellten Feststoffseparatoren auf, sodass die einzelnen Feststoffseparatoren eine unterschiedliche Leistungsfähigkeit aufweisen. Auch ist es erforderlich, zunächst das Feststoffelektrolytpulver aus einzelnen Edukten herzustellen. Dies ist dabei vergleichsweise energieintensiv, und nach dem Hersteller des Feststoffelektrolytpulver ist es erforderlich, dieses geeignet zu lagern, sodass eine Zersetzung vermieden wird.

Der Erfindung liegt die Aufgabe zugrunde, ein besonders geeignetes Verfahren zur Herstellung eines Feststoffseparators, ein besonders geeignetes Verfahren zur Herstellung einer Feststoffbatterie und eine besonders geeignete Vorrichtung zur Herstellung eines Feststoffseparators anzugeben, wobei vorteilhafterweise ein Ausschuss verringert ist, wobei geeigneterweise eine Herstellungszeit und/oder Herstellungskosten reduziert sind, und wobei insbesondere eine Gleichartigkeit der hergestellten Feststoffseparatoren erhöht ist.

Hinsichtlich des Verfahrens zur Herstellung eines Feststoffseparators wird diese Aufgabe durch die Merkmale des Anspruchs 1, hinsichtlich des Verfahrens zur Herstellung einer Feststoffbatterie durch die Merkmale des Anspruchs 9 und hinsichtlich der Vorrichtung durch die Merkmale des Anspruchs 10 erfindungsgemäß gelöst. Vorteilhafte Weiterbildungen und Ausgestaltungen sind Gegenstand der jeweiligen Unteransprüche.

Das Verfahren dient der Herstellung eines Feststoffseparators und ist hierfür geeignet, insbesondere vorgesehen und eingerichtet. Der Feststoffseparator ist dabei geeignet, insbesondere vorgesehen und eingerichtet, eine Feststoffbatterie zu bilden. Mit anderen Worten ist es möglich, den Feststoffseparator zur Herstellung der Feststoffbatterie zu verwenden. Dabei weist die Feststoffbatterie zweckmäßigerweise zudem eine Kathode auf, die an dem Feststoffseparator befestigt ist. Insbesondere bilden dabei der Feststoffseparator sowie die Kathode die Feststoffbatterie. Alternativ hierzu umfasst die Feststoffbatterie beispielsweise mehrere derartige Verbunde aus Feststoffseparatoren/Kathoden, die zum Beispiel übereinandergestapelt, insbesondere zu einem sogenannten "Stack", oder aufgerollt sind, insbesondere zu einer sogenannten "Jelly roll".

Die Feststoffbatterie ist insbesondere wiederladbar ausgestaltet und zweckmäßigerweise eine Sekundärbatterie. Vorzugsweise ist die Feststoffbatterie im bestimmungsgemäßen Zustand ein Bestandteil eines Kraftfahrzeugs. Hierfür ist die Feststoffbatterie geeignet, insbesondere vorgesehen und eingerichtet. Im bestimmungsgemäßen Zustand ist die Feststoffbatterie beispielsweise ein Bestandteil eines Energiespeichers des Kraftfahrzeugs, der mehrere derartige Feststoffbatterien aufweist. Vorzugsweise sind die Feststoffbatterien auf mehrere Batteriemodule aufgeteilt, die zueinander wiederum baugleich sind. Die Feststoffbatterien sind insbesondere in einem Gehäuse des Energiespeichers bzw. des jeweiligen Batteriemoduls angeordnet und miteinander elektrisch parallel und/oder in Reihe geschaltet. Somit ist die an dem Energiespeicher/Batteriemodul anliegende elektrische Spannung ein Vielfaches der mittels jeder der Feststoffbatterien bereitgestellten elektrischen Spannung. Zweckmäßigerweise sind sämtliche Feststoffbatterien dabei zueinander baugleich, was eine Fertigung vereinfacht.

Das Kraftfahrzeug ist bevorzugt landgebunden und weist vorzugsweise eine Anzahl an Rädern auf, von denen zumindest eines, geeigneterweise mehrere oder alle, mittels eines Antriebs, angetrieben sind. Insbesondere ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw). Alternativ ist das Kraftfahrzeug beispielsweise ein Boot, ein Flugzeug, ein Helikopter, ein Multicopter, ein Fahrrad (Pedelec), ein Motorrad oder ein Raumfahrzeug.

Mittels des Antriebs erfolgt zweckmäßigerweise eine Fortbewegung des Kraftfahrzeugs. Zum Beispiel ist der Antrieb, insbesondere der Hauptantrieb, zumindest teilweise elektrisch ausgestaltet, und das Kraftfahrzeug ist beispielsweise ein Elektrofahrzeug. Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen dem Energiespeicher und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer weiteren Alternative ist die Feststoffbatterie ein Bestandteil eines Flurförderfahrzeug, einer Industrieanlage, eines handgeführten Geräts, wie beispielsweise eines Werkzeugs, insbesondere eines Akkuschraubers. In einer weiteren Alternative ist die Feststoffbatterie ein Bestandteil einer Energieversorgung und wird dort beispielsweise als sogenannte Pufferbatterie verwendet. In einer weiteren Alternative ist die Feststoffbatterie ein Bestandteil eines tragbaren Geräts, beispielsweise eines tragbaren Mobiltelefons, oder eines sonstigen Wearables. Auch ist es möglich, eine derartige Feststoffbatterie im Campingbereich, Modellbaubereich oder für sonstige Outdoor-Aktivitäten zu verwenden.

Gemäß dem Verfahren wird eine Metallfolie bereitgestellt. Die Metallfolie ist aus einem elektrisch leitfähigen Material erstellt, beispielsweise aus einem Aluminium, Nickel oder besonders bevorzugt einem Kupfer. Zweckmäßigerweise ist die Metallfolie biegeschlaff und weist insbesondere eine Dicke unter 0,1 mm, 0,05 mm, 0,001 oder 0,005 mm auf. Somit ist die Metallfolie im Wesentlichen zweidimensional ausgestaltet. Mit anderen Worten weist die Metallfolie in den anderen Dimensionen vergrößerte Ausdehnung auf, die jeweils insbesondere größer als 1 cm ist. Beispielsweise wird die Metallfolie dabei blatt-bzw. bogenweise bereitgestellt. Alternativ hierzu wird die Metallfolie als Bandware bereitgestellt, die bei dem Verfahren zum Beispiel sukzessive oder vorzugsweise kontinuierlich abgerollt wird.

Auf die Metallfolie werden mehrere Edukte aufgebracht. Somit werden zumindest zwei unterschiedliche Edukte aufgebracht, also Materialien, die sich unterscheidenden. Vorzugsweise werden mehrere derartige unterschiedliche Edukte aufgebracht. Die Edukte unterscheiden sich dabei beispielsweise aufgrund deren physikalischen Eigenschaften. So weisen diese beispielsweise die gleiche chemische Zusammensetzung, jedoch insbesondere eine unterschiedliche Ausbildung auf, wie eine unterschiedliche Kristallisation oder und Gitterstruktur. Besonders bevorzugt jedoch unterscheiden sich die Edukte zumindest teilweise chemisch. Hierbei weist zweckmäßigerweise keines der Edukte bereits die chemische Zusammensetzung des Feststoffseparators oder eines Teils davon auf, wie eines Feststoffelektrolyten. Mit anderen Worten ist es nicht möglich, aus lediglich einem der Edukte den Feststoffseparator oder zumindest den Feststoffelektrolyten zu bilden.

Das Verhältnis der Mengen der Edukte zueinander ist zweckmäßigerweise entsprechend des gewünschten Feststoffseparators gewählt und/oder anhand dessen bestimmt. Die Menge der Edukte, die auf die Metallfolie aufgebracht wird, korrespondiert zu einer gewünschten Dicke des Feststoffseparators. Mit anderen Worten wird somit bei einem abweichenden gewünschten Feststoffseparator das Verhältnis der Edukte zueinander verändert oder andere Edukte herangezogen. Falls hingegen die Dicke des Feststoffseparators erhöht werden soll, wird insbesondere die Menge sämtlicher Edukte erhöht, wobei das Verhältnis jedoch gleich belassen wird.

Zum Aufbringen der Edukte werden diese beispielsweise auf die Metallfolie gesprüht oder darauf gerieselt, insbesondere sofern es sich um Festkörper, wie Pulver, oder eine Flüssigkeit handelt. Alternativ hierzu wird beispielsweise die Metallfolie entlang oder durch ein Bad eines der Edukte geführt. Beispielsweise werden die Edukte auf die vollständige Metallfolie oder bevorzugt lediglich auf einen bestimmten Bereich aufgetragen, insbesondere sofern die Metallfolie kontinuierlich bereitgestellt wird. Das Auftragen erfolgt derart, dass eine Mischung gebildet wird. Beispielsweise werden hierfür die Edukte zumindest teilweise gleichzeitig und/oder nacheinander auf die Metallfolie aufgetragen. Dabei wird beispielsweise eines der Edukte auf ein bereits sich auf der Metallfolie befindendes Edukt aufgebracht oder seitlich zu diesem versetzt. Beispielsweise werden die Edukte, die auf die Metallfolie aufgebracht worden sind, vermischt, oder das Vermischen erfolgt beispielsweise während des Aufbringens. Somit ist eine Homogenität der Mischung erhöht. Beispielsweise wird aufgrund des Auftragens, der Wahl der Edukte und/oder einer sonstigen Tätigkeit eine im Wesentlichen homogene Mischung bereitgestellt. Alternativ hierzu verbleibt diese inhomogen, also heterogen. Mit anderen Worten sind die Edukte in unterschiedlichen Bereichen der Metallfolie, beispielsweise vollständig oder vorwiegend, angeordnet. Somit weist die Mischung in unterschiedlichen Bereichen der Metallfolie eine unterschiedliche Zusammensetzung auf.

In einem nachfolgenden Arbeitsschritt wird auf die Mischung eingewirkt, sodass die Edukte miteinander reagieren und eine keramische Schicht ausgebildet wird. Aufgrund des Reagierens der Edukte miteinander wird dabei ein Produkt erstellt und beispielsweise eines oder mehrere Nebenprodukte. Das Produkt befindet sich dabei auf der Metallfolie. Aufgrund des Einwirkens reagieren zweckmäßigerweise sämtliche Edukte miteinander, auch wenn die Mischung eine geringe Homogenität aufweist. Insbesondere ist das Einwirkens entsprechend ausgebildet.

Beispielsweise ist dabei bereits das Produkt die keramische Schicht, oder zum Erstellen der keramischen Schicht aus dem Produkt sind noch weitere Arbeitsschritte erforderlich. Beispielsweise verbleiben die Nebenprodukte auf der Metallfolie. Alternativ hierzu werden diese abgeführt, und/oder diese sind flüchtig. Das Produkt weist zweckmäßigerweise die Zusammensetzung des Feststoffelektrolyten auf oder zumindest der keramischen Schicht.

Zweckmäßigerweise bildet die keramische Schicht den Feststoffelektrolyten, der insbesondere an der Metallfolie anhaftet oder zumindest auf diese aufgebracht ist. Vorzugsweise bilden dabei die Metallfolie und der darauf aufgebrachte und/oder darauf anhaftende Feststoffelektrolyt den Feststoffseparator.

Bei dem Verfahren ist somit es nicht erforderlich, zur Herstellung des Feststoffelektrolyten, insbesondere der keramischen Schicht, und somit des Feststoffseparators, zunächst ein Feststoffelektrolytpulver bereitzustellen, das die Zusammensetzung des gewünschten Feststoffelektrolyten aufweist. Somit ist eine Anzahl an erforderlichen Herstellungsschritte und auch eine Herstellungszeit reduziert. Dabei ist es nicht erforderlich, das Feststoffelektrolytpulver zu lagern und entsprechende Vorrichtungen für die Lagerung zu treffen, sodass keine Zersetzung und/oder ungewünschte Reaktion des Feststoffelektrolytpulvers erfolgt. Auch ist es nicht erforderlich, das Feststoffelektrolytpulver hinsichtlich einer Stabilität für einen bestimmten Zeitraum hin zu optimieren. Zudem ist es nicht erforderlich, zunächst Energie für die Reaktion der Edukte miteinander zuzuführen, um das Feststoffelektrolytpulver herzustellen, wobei zusätzliche Energie erforderlich ist, um das Feststoffelektrolytpulver in einen Zustand zu verbringen, sodass ein Transport zu der Metallfolie möglich ist. Auch entfällt die anschließende Energiezufuhr, um das Feststoffelektrolytpulver, das zumindest zeitweise stabil ist, erneut zu aktivieren und die keramische Schicht auszubilden. Vielmehr wird gemäß dem Verfahren die Energie, die aufgrund des Einwirkens zur Reaktion benötigte wird, auch zum Herstellen der keramischen Schicht herangezogen, sodass ein Energiebedarf verringert ist.

Der Feststoffelektrolyt / die keramische Schicht besteht oder umfasst dabei zweckmäßigerweise LLZO oder LATP. Geeigneterweise ist der Feststoffelektrolyt / die keramische Schicht ein sulfidischer und/oder oxidischer Feststoffelektrolyt. Besonders bevorzugt ist der Feststoffelektrolyt / die keramische Schicht ein anorganischer Feststoffelektrolyt mit einer NASICON-Struktur, insbesondere LATP, LAPG oder LAGTP, ein anorganischer Feststoffelektrolyt mit einer Granat-Struktur, insbesondere LLZO, oder ein anorganischer Feststoffelektrolyt mit einer LISICON-Struktur. Bei einer weiteren Alternative weist der Feststoffelektrolyt / die keramische Schicht eine Perovskit- oder Anti-Perovskit-Struktur auf. Hierbei sind die Edukte geeigneterweise entsprechend angepasst.

Zweckmäßigerweise wird mittels des gemäß dem Verfahren erstellten Feststoffseparators eine Anode einer Feststoffbatterie zumindest teilweise gebildet. Zum Herstellen der Feststoffbatterie wird zweckmäßigerweise an dem Feststoffseparator, insbesondere an dem Feststoffelektrolyten, eine Kathode befestigt. Die Kathode weist geeigneterweise einen Stromsammler auf, auf den eine weitere Schicht aufgebracht ist, die ein Aktivmaterial, ein Leitmittel und/oder einen Binder aufweist. Das Aktivmaterial der Kathode ist dabei vorzugsweise ein positives Elektrodenaktivmaterial, wie beispielsweise Lithium-Nickel-Mangan-Cobalt-Oxid (LNMC), Lithium-Nickel-Mangan-Oxid (LNMO), LiCoPO4, LiNiPO4, LiFePO4 oder Lithium-Cobalt-Oxid (LCO). Vorzugsweise wird Lithium-Cobalt(III)-Oxid (LiCoO2), NMC, beispielsweise NMC622 oder NMC811, NCA, LMNO oder LFP herangezogen. Bei Herstellung der Kathode wird als Stromsammler vorzugsweise eine Aluminiumfolie verwendet.

Beispielsweise wird zum Einwirken auf die Mischung zu dieser ein bestimmtes weiteres Element hinzugefügt. Alternativ hierzu wird beispielsweise eine mechanische Kraft auf diese aufgebracht, insbesondere ein Druck. Bei einer weiteren Alternative sind die Edukte beispielsweise derart gewählt, dass diese von sich aus miteinander reagieren, zum Beispiel bei Umgebungsbedingungen. Zum Einwirken wird insbesondere eine Zeit für die Reaktion bereitgestellt. Geeigneterweise werden dabei die Edukte derart auf die Metallfolie ausgebracht, dass bis zum Hinzufügen des letzten Edukts die Reaktion unterbleibt. Besonders bevorzugt jedoch wird zum Einwirken die Mischung erwärmt. Somit ist eine ungewollte Verformung / Beschädigungen der Metallfolie vermieden, und es entstehen auch keine ungewünschten Nebenreaktionen. Ferner sind Herstellungskosten für eine Vorrichtung reduziert, mittels derer das Verfahren durchgeführt wird.

Aufgrund des Erwärmens ist es zudem möglich, die Mischung über einen vergleichsweise großen Bereich/Volumen zur Reaktion zu veranlassen. Ferner weisen beispielsweise die etwaigen Nebenprodukte aufgrund der erhöhten Temperatur einen gasförmigen Zustand auf, sodass diese flüchtig sind und nicht auf der Metallfolie verbleiben. Somit ist eine Reinheit des Feststoffseparators erhöht. Insbesondere erfolgt dabei das Erwärmen derart, dass die der Mischung schon zumindest teilweise schmilzt. Somit wird zum Erstellen der keramischen Schicht Vorzugsweise reaktives Schmelzen verwendet.

Zwar ist bei dem Verfahren ein Erwärmen der Mischung erforderlich. Die damit zugeführte Energie ist jedoch gleich oder geringer als die Menge an Energie, die zur Erstellung des Feststoffelektrolytpulvers aus den benötigten Edukten erforderlich ist, da keine Stabilität des Feststoffelektrolytpulvers erreicht werden muss. Zudem entfällt das nachfolgende Erwärmen, wenn das Feststoffelektrolytpulver auf die Metallfolie aufgebracht wurde. Hierbei ist die erforderliche Erwärmung zudem vergleichsweise groß, da erst der stabile Zustand des Feststoffelektrolytpulvers überwunden werden muss.

Zum Beispiel werden zum Erwärmen die Metallfolie und die Mischung in/durch einen Ofen geführt oder mit Wärmestrahlung oder IR-Strahlung behandelt, wofür zum Beispiel ein Laser verwendet wird. Alternativ hierzu werden diese mit einem heißen Gas beaufschlagt. In einer weiteren Alternative erfolgt das Erwärmen der Metallfolie mittels einer Walze, über die die Metallfolie geführt wird. Bei einer weiteren Alternative erfolgt das Erwärmen mittels Induktion. Hierbei werden in der Metallfolie insbesondere Wirbelströme ausgebildet, die zu einer Erwärmung dieser führen.

Beispielsweise werden während des Aufbringens der Edukte diese bereits teilweise erwärmt, sodass eine anschließende Erwärmung der Mischung lediglich um ein geringes Maß erforderlich ist. Auch wird hierbei beispielsweise eine Homogenität der Mischung erhöht.

Insbesondere wird nach dem Erwärmen, oder zumindest nach der Fertigstellung des Produkts aus den Edukten dieses abgekühlt, wobei dieses und die Metallfolie beispielsweise lediglich der Umgebung ausgesetzt werden. Alternativ hierzu erfolgt ein geführtes Abkühlen über definierte Temperaturgrenzen in einem bestimmten Zeitraum. Somit ist beispielsweise das Ausbilden einer bestimmten Kristallisation oder sonstigen physikalischen Gegebenheiten ermöglicht.

Insbesondere wird zum Erstellen der keramischen Schicht das Produkt lediglich abgekühlt, wobei dies zweckmäßigerweise drucklos erfolgt. Mit anderen Worten wird auf das Produkt keine zusätzliche Kraft ausgeübt, um die keramische Schicht zu erstellen. Infolgedessen erfolgt eine vergleichsweise homogene Abkühlung, und es werden insbesondere keine Korngrenzen, also zweidimensionale Defektstellen, in der keramische Schicht ausgebildet, die eine Leistungsfähigkeit des Feststoffseparators beeinträchtigen könnten. Infolgedessen weisen sämtliche gemäß dem Verfahren hergestellten Feststoffseparatoren im Wesentlichen die gleichen Eigenschaften auf, und eine Gleichartigkeit der Feststoffseparatoren ist erhöht. Auch bilden sich auf diese Weise in der keramischen Schicht, also in dem Feststoffelektrolyten, lediglich wenige keine und/oder kleine Poren aus, sodass eine Ionenleitfähigkeit des Feststoffelektrolyten verbessert ist.

Zum Beispiel erfolgt über eine vergleichsweise hohe Erwärmung der Mischung, sodass die Metallfolie sich insbesondere chemisch oder physikalisch mit dem Produkt verbindet. Besonders bevorzugt jedoch wird die Mischung lediglich auf eine Temperatur unterhalb eines Schmelzpunkts der Metallfolie erwärmt. Mit anderen Worten verbleibt die Metallfolie stabil und diese wird nicht verformt. Somit weist der Feststoffseparator stets die vorgegebene, definierte Form auf, was eine nachfolgende Verarbeitung erleichtert. Auch ist eine zusätzliche Stabilisierung der Metallfolie während des Verfahrens nicht erforderlich. Zudem ist eine benötigte Energie zum Erwärmen verringert.

Beispielsweise sind die Edukte chemisch reine Elemente. Alternativ oder in Kombination hierzu sind sämtliche Edukte anorganischer Stoffe. Besonders bevorzugt jedoch ist zumindest eines der Edukte ein organisches Salz eines Bestandteils der keramischen Schicht, also insbesondere des herzustellenden Feststoffelektrolyten. Vorzugsweise sind hierbei mehrere Edukte entsprechende organische Salze, beispielsweise sämtliche Edukte. Somit ist eine Verfügbarkeit der Edukte vergrößert und Materialkosten reduziert. Insbesondere handelt es sich bei dem organischen Salz um eine Carbonsäure oder ein Alkoholat. Zweckmäßigerweise wird dabei zum Einwirken die Mischung erwärmt, wobei aufgrund des Einwirkens geeigneterweise der jeweilige organische Rest des jeweiligen Salzes ausgebrannt wird, sodass lediglich die anorganischen Bestandteile der Edukte in der keramischen Schicht verbleiben und/oder diese bilden. Insbesondere wechselt bei dem Ausbrennen dabei der jeweilige Rest oder zumindest die anhand der organischen Reste gebildeten Nebenprodukte in den gasförmigen Zustand über.

Beispielsweise sind sämtliche Edukte Festkörper. Auf diese Weise ist ein Aufbringen auf die Metallfolie erleichtert sowie eine Lagerhaltung. Alternativ hierzu sind beispielsweise eine oder sämtliche Edukte Flüssigkeiten. Somit ist ein Vermischen in dieser erleichtert. Besonders bevorzugt jedoch ist zumindest eines der Edukte ein Bestandteil einer eine Flüssigkeit aufweisenden Dispersion. Beispielsweise sind hierbei mehrere der Edukte oder alle der Edukte ein Bestandteil einer jeweiligen Dispersion, die jeweils eine entsprechende Flüssigkeit umfasst. Dabei sind beispielsweise die Flüssigkeiten gleich oder zueinander unterschiedlich. Aufgrund der Dispersion liegt das bzw. die Edukte in der jeweiligen Flüssigkeit als Feststoff vor, insbesondere als Partikel, die zum Beispiel in der Flüssigkeit fein verteilt sind. Somit sind Herstellungskosten der Edukte reduziert und ein Aufbringen auf die Metallfolie erleichtert. Zudem erfolgt auf diese Weise eine vergleichsweise schnelle und/oder umfangreiche Vermischung mit den weiteren Edukten, sodass die Mischung vergleichsweise homogen ist. Dabei erfolgt jedoch keine Reaktion des jeweiligen Edukts mit der Flüssigkeit, und das Edukt ist geeigneterweise nicht in der Flüssigkeit gelöst. Infolgedessen wird eine Reaktion mit den weiteren Edukten nicht behindert.

Zweckmäßigerweise ist hierbei die Flüssigkeit derart gewählt, dass eine Reaktion mit den (anderen) Edukten, also sämtlichen Edukten, unterbleibt. Mit anderen Worten wird keines der Edukte in der Flüssigkeit gelöst, und diese dient somit insbesondere lediglich als Träger für das jeweilige Edukt. Aufgrund einer derartigen Flüssigkeit sind keine unerwünschten Reaktionen zu erwarten. Geeigneterweise wechselt aufgrund des Erwärmens die Flüssigkeit in den gasförmigen Zustand, sodass diese mit lediglich geringem Aufwand von der Metallfolie abgeführt werden kann.

Beispielsweise verbleiben bei dem Einwirken die einzelnen Bestandteile der Mischung oder zumindest des Produkts in dem festen Aggregatszustand. Besonders bevorzugt jedoch wird aufgrund des Einwirkens die Mischung oder ein Teil davon, der zum Beispiel die keramische Schicht ausbilden soll, zweckmäßigerweise das Produkt, in einen flüssigen oder pastösen Zustand überführt. Zum Beispiel wird hierfür die Mischung erwärmt. Alternativ oder in Kombination hierzu erfolgt eine zusätzliche Behandlung, beispielsweise das Ausüben eines Drucks und/oder die Behandlung mit einer weiteren chemischen Verbindung. Aufgrund der Überführung in den pastösen/flüssigen Zustand werden beispielsweise vorhandene Hohlräume in dem Produkt verschlossen, sodass die daraus gebildete keramische Schicht lediglich wenige oder keine Poren aufweist. Insbesondere erfolgt nach dem Versetzen in den flüssigen oder pastösen Zustand zum Ausbilden der keramischen Schicht lediglich ein Abkühlen, sodass eine benötigte Energie verringert ist.

Besonders bevorzugt wird die flüssige oder pastöse Mischung oder zumindest der flüssige/pastöse Teil der Mischung auf der Metallfolie verteilt. Hierfür wird insbesondere ein Rakel, ein Pinsel, eine Walze oder zum Beispiel ein Kalander herangezogen. Somit ist es möglich, die Metallfolie vollflächig oder zumindest in einemgewünschten Bereich mit der keramischen Schicht, insbesondere dem Feststoffelektrolyten, zu versehen. Auch ist es somit vereinfacht, sicherzustellen, dass sich der Feststoffelektrolyt lediglich oder zumindest auch in bestimmten Bereichen der Metallfolie befindet. Somit ist eine Gleichartigkeit der mit dem Verfahren hergestellten Feststoffseparatoren weiter verbessert.

Das andere Verfahren dient der Herstellung einer Feststoffbatterie. Hierbei wird zunächst ein Feststoffseparator erstellt. Hierfür wird eine Metallfolie bereitgestellt. Auf die Metallfolie werden mehrere Edukte zum Ausbilden einer Mischung auf. Auf die Mischung wird eingewirkt, sodass die Edukte miteinander reagieren und eine keramische Schicht ausgebildet wird. Die keramische Schicht bildet dabei insbesondere einen Feststoffelektrolyten. Zumindest weist die keramische Schicht bevorzugt eine Ionenleitfähigkeit auf, vorzugsweise für Lithiumionen. Mittels der Metallfolie sowie des Feststoffelektrolyten/der keramischen Schicht ist dabei zweckmäßigerweise der Feststoffseparator gebildet. An dem Feststoffseparator wird eine Kathode befestigt. Die Kathode weist geeigneterweise einen Stromsammler auf, auf den eine weitere Schicht aufgebracht ist, die ein Aktivmaterial, ein Leitmittel und/oder einen Binder aufweist. Das Aktivmaterial der Kathode ist dabei vorzugsweise ein positives Elektrodenaktivmaterial, wie beispielsweise Lithium-Nickel-Mangan-Cobalt-Oxid (LNMC), Lithium-Nickel-Mangan-Oxid (LNMO), LiCoPO4, LiNiPO4, LiFePO4 oder Lithium-Cobalt-Oxid (LCO). Vorzugsweise wird Lithium-Cobalt(III)-Oxid (LiCoO2), NMC, beispielsweise NMC622 oder NMC811, NCA, LMNO oder LFP herangezogen. Als Stromsammler der Kathode wird vorzugsweise eine Aluminiumfolie verwendet. Zweckmäßigerweise wird die Kathode derart angeordnet, dass sich der Feststoffelektrolyt sowie die weitere Schicht zwischen dem Stromsammler und der Metallfolie befindet. Beispielsweise ist mittels des Feststoffseparators sowie der Kathode die Feststoffbatterie gebildet. Alternativ hierzu ist lediglich eine galvanische Einheit der Feststoffbatterie mittels dieser gebildet, und die Feststoffbatterie weist eine Mehrzahl oder Vielzahl derartiger galvanische Elemente auf, die zum Beispiel übereinandergestapelt sind.

Die Vorrichtung dient der Herstellung eines Feststoffseparators und ist hierfür geeignet, insbesondere vorgesehen und eingerichtet. Der Feststoffseparator weist dabei insbesondere eine Metallfolie auf, auf die eine keramische Schicht aufgetragen ist, insbesondere angebunden. Die keramische Schicht ist dabei zweckmäßigerweise mittels eines Feststoffelektrolyten gebildet, oder der Feststoffelektrolyt bildet die keramische Schicht. Die Vorrichtung umfasst eine erste Komponente zur Bereitstellung einer Metallfolie. Bei der ersten Komponente handelt sich beispielsweise um einen Abroller, mittels dessen die bandförmige Metallfolie abgewickelt wird. Ferner weist die Vorrichtung eine zweite Komponente zum Aufbringen von mehreren Edukten auf der Metallfolie auf, sodass eine Mischung ausgebildet wird. Die zweite Komponente weist dabei zweckmäßigerweise mehrere Düsen oder Sprühgeräte auf, mittels derer die entsprechenden Edukte auf die Metallfolie aufgebracht werden. Alternativ oder in Kombination hierzu umfasst die zweite Komponente ein Bad für zumindest eines der Edukte. Die Vorrichtung umfasst ferner eine dritte Komponente zum Einwirken auf die Mischung, sodass die Edukte miteinander reagieren und eine keramische Schicht ausgebildet wird. Die dritte Komponente weist hierfür insbesondere einen Ofen oder ein Heißluftgebläse auf.

Die Vorrichtung ist gemäß einem Verfahren betrieben, bei dem eine Metallfolie bereitgestellt wird. Auf die Metallfolie werden mehrere Edukte zum Ausbilden einer Mischung aufgebracht, und auf die Mischung wird eingewirkt, sodass die Edukte miteinander reagieren und eine keramische Schicht ausgebildet wird. Die Vorrichtung ist somit insbesondere geeignet, zweckmäßigerweise vorgesehen und eingerichtet, das Verfahren durchzuführen. Insbesondere umfasst die Vorrichtung ein Steuergerät, mittels dessen das Verfahren zumindest teilweise durchgeführt wird, und das vorgesehen und eingerichtet ist, das Verfahren durchzuführen.

Die Erfindung betrifft ferner einen gemäß dem entsprechenden Verfahren hergestellten Feststoffseparator / Feststoffbatterie. Ferner betrifft die Erfindung ein Kraftfahrzeug, wie einen Personenkraftwagen (PKW), mit einer derartigen Feststoffbatterie, insbesondere einem derartigen Verbund. Die Feststoffbatterie wird insbesondere zur Bestromung eines Hauptantriebs des Kraftfahrzeugs verwendet.

Die im Zusammenhang mit den beiden Verfahren beschriebenen Vorteile und Weiterbildungen sind sinngemäß auch auf die Vorrichtung / den Feststoffseparator / die Feststoffbatterie / die Verwendung / das Kraftfahrzeug sowie untereinander zu übertragen und umgekehrt.

Nachfolgend wird ein Ausführungsbeispiel der Erfindung anhand einer Zeichnung näher erläutert. Darin zeigen:
- Fig. 1: schematisch vereinfacht ein Kraftfahrzeug, das mehrere baugleiche Feststoffbatterien aufweist,
- Fig. 2: schematisch in einer Schnittdarstellung eine der Feststoffbatterien,
- Fig. 3: ein Verfahren zur Herstellung der Feststoffbatterie, das ein Verfahren zur Herstellung eines Feststoffseparators umfasst, und
- Fig. 4: schematisch vereinfacht eine Vorrichtung zur Herstellung des Feststoffseparators.

Einander entsprechende Teile sind in allen Figuren mit den gleichen Bezugszeichen versehen.

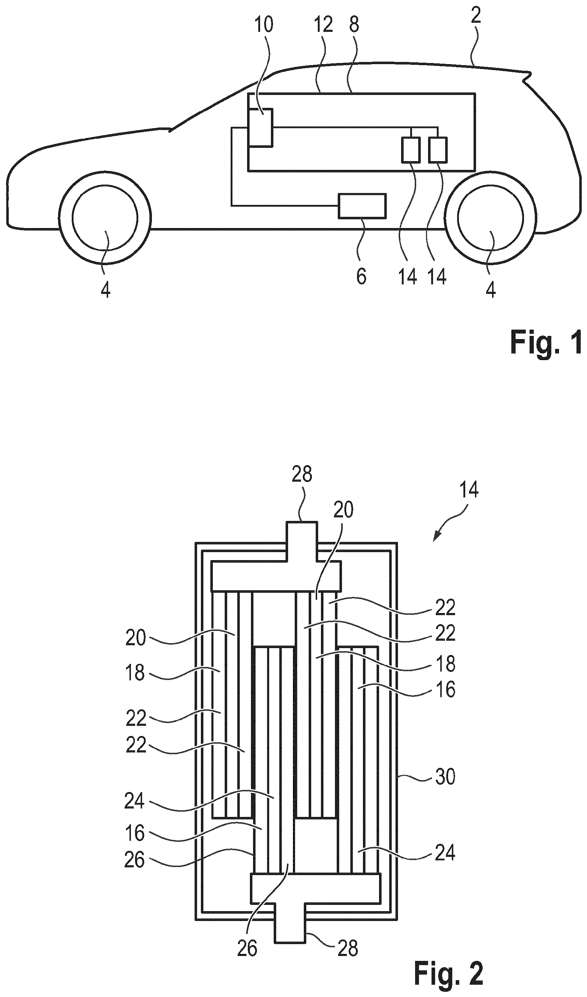

In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist einen Umrichter auf, mittels dessen der Elektromotor gespeist ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Energiespeichergehäuse 12 des Energiespeichers 8 eingebracht ist, das aus einem Edelstahl erstellt ist.

Innerhalb des Energiespeichergehäuses 12 des Energiespeichers 8 sind mehrere nicht näher dargestellte zueinander baugleiche Batteriemodule angeordnet, die jeweils mehrerer Feststoffbatterien 14 umfassen. Die Feststoffbatterien 14 jedes Batteriemoduls sind dabei zueinander teilweise elektrisch in Reihe sowie teilweise zueinander elektrisch parallel geschaltet. Ein Teil der Batteriemodule wiederum ist zueinander elektrisch in Reihe und diese wiederum elektrisch zueinander parallel geschaltet sind. Der elektrische Verband der Batteriemodule ist mit der Schnittstelle 10 elektrisch kontaktiert, sodass bei Betrieb des Antriebs 6 ein Entladen oder Laden (Rekuperation) der Batteriemodule und somit auch der Feststoffbatterien 14 erfolgt. Aufgrund der elektrischen Verschaltung ist dabei die an der Schnittstelle 10 bereitgestellte elektrische Spannung, die 400 V beträgt, ein Vielfaches der mit jedem der Batteriemodule und auch mit jeder der Feststoffbatterien 14 bereitgestellten elektrischen Spannung.

In Figur 2 ist in einer Schnittdarstellung eine der zueinander baugleichen Feststoffbatterien 14 dargestellt. Die Feststoffbatterie 14 weist mehrere Feststoffseparatoren 16 und Kathoden 18 auf, von denen jeweils lediglich zwei dargestellt sind. Die Kathoden 18 weisen einen Stromsammler 20 auf, der auch als Ableiter bezeichnet wird. Diese sind jeweils mittels einer Aluminiumfolie gebildet, die beidseitig mittels jeweils einer weiteren Schicht 22 versehen ist. Die weitere Schicht 22 besteht dabei aus einem Aktivmaterial, wie LFP, einem Binder sowie einem Leitadditiv. Die Separatoren 16 weisen jeweils eine Metallfolie 24 auf, deren beiden Seiten mit einer keramischen Schicht 26 versehen ist, die einen Feststoffelektrolyten ausbildet. Die Feststoffseparatoren 16 sowie die Kathoden 18 sind abwechselnd übereinander gestapelt, und sämtliche Metallfolien 24 und sämtliche Stromsammler 20 sind jeweils mit einer Stromschienen 28 elektrisch kontaktiert. Diese sind durch ein Gehäuse 30 geführt innerhalb dessen der Stapel aus den Feststoffseparatoren 16 und Kathoden 18 angeordnet ist.

Die Feststoffbatterie 14 weist keine flüssigen Bestandteile auf, und bei einem Laden wird an die beiden Stromschienen 28 eine elektrische Spannung angelegt, Infolgedessen fließen Arbeitsionen, nämlich Lithiumionen, aus der weiteren Schicht 22 durch den Feststoffelektrolyten hindurch in Richtung der Metallfolie 24 und lagern sich dort an. Bei einem Entladen der Feststoffbatterie 24 hingegen werden die Arbeitsionen von der Metallfolie 24 wegbewegt, sodass erneut der Feststoffelektrolyt an dieser jeweils direkt anliegt.

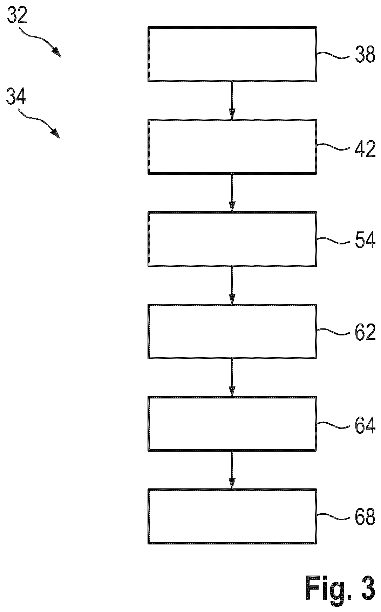

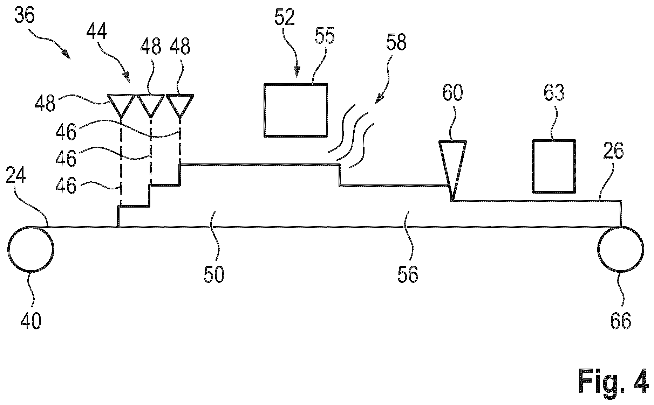

In Figur 3 ist ein Verfahren 32 zur Herstellung der Feststoffbatterie 14 dargestellt. Das Verfahren 32 zur Herstellung der Feststoffbatterie 14 beginnt mit einem Verfahren 34 zur Herstellung des Feststoffseparators 16, wofür eine in Figur 4 schematisch vereinfacht dargestellte Vorrichtung 36 zur Herstellung des Feststoffseparators 16 verwendet wird, die im Weiteren auch lediglich als Vorrichtung 36 bezeichnet wird. Bei dem Verfahren 34 zur Herstellung des Feststoffseparators 16 wird ein erster Arbeitsschritt 38 durchgeführt, in dem ein die Metallfolie 24 bereitgestellt wird, wofür eine erste Komponente 40 der Vorrichtung 36 verwendet wird. Das Bereitstellen erfolgt hierbei mittels eines Abrollers der ersten Komponente, von dem die als Band vorliegende Metallfolie 24 abgerollt wird.

In einem zweiten Arbeitsschritt 42 werden mittels einer zweiten Komponente 44 mehrere Edukte 46 auf die Metallfolie 24 aufgebracht. Die zweite Komponente 44 weist hierfür mehrere Düsen 48 auf, die in vertikaler Richtung oberhalb der Metallfolie 24 angeordnet sind, sodass die Metallfolie 24 mittels der Edukte 46 besprüht wird. Die Düsen 48 sind entlang der Bewegungsrichtung der Metallfolie 24 hintereinander angeordnet, sodass bereits auf die Metallfolie 48 aufgebrachte Edukte 46 mit dem mittels der nachfolgenden Düse 48 bereitgestellten Edukt 46 besprüht werden. Infolgedessen wird eine Mischung 50 ausgebildet, die aus den Edukten 46 zusammengesetzt ist. Aufgrund des zeitlich nacheinander erfolgenden Auftragens der Edukte 46 ist die Mischung 50 zunächst nicht homogen.

Die einzelnen Edukte 46 sind organische Salze der Bestandteile der keramischen Schicht 26. Dabei ist zumindest eines der Edukte 46 eine Carbonsäure und ein anderes ein Alkoholat. Zwei der Edukte 46 sind pulverförmig, und die zugeordneten Düsen 48 sind entsprechend ausgestaltet. Das verbleibende Edukt 46 ist ein Bestandteil einer Dispersion, die zudem eine nicht näher dargestellte Flüssigkeit aufweist. Dieses Edukt 46 wird somit mittels Sprühens der Dispersion auf die Metallfolie 24 bzw. auf eines der sich bereits dort befindenden Edukt 46 aufgebracht. Aufgrund der deswegen auf der Metallfolie 24 vorhandenen Flüssigkeit zeitlich nachfolgend eine Durchmischung der Edukte 46, sodass die Homogenität der Mischung 50 vergrößert wird. Die Flüssigkeit ist dabei derart gewählt, dass eine Reaktion mit den Edukten 46 unterbleibt. Mit anderen Worten werden die Edukte 46 in der Flüssigkeit nicht gelöst.

Die Metallfolie 24 mit der auf diese Weise erstellten Mischung 50 wird zu einer dritten Komponente 52 verbracht. Dabei erfolgt aufgrund des Bewegens sowie des Zeitraums bis zum Erreichen der dritten Komponente 52 eine weitere Durchmischung der einzelnen Edukte 46 der Mischung 50, sodass eine Homogenität der Mischung 50 vergrößert wird. Mittels der dritten Komponente 52 wird in einem dritten Arbeitsschritt 54 auf die Mischung 50 eingewirkt. Hierfür wird mittels eines Ofens 55 der dritten Komponenten 52 die Mischung 50 erwärmt, durch den die mittels der Mischung 50 versehene Metallfolie 24 verfahren wird. Aufgrund der Erwärmung reagieren die einzelnen Edukte 46 miteinander, sodass ein Produkt 56 entsteht sowie mehreren Nebenprodukte 58. Beim Erstellen des Produkts 46 werden dabei aufgrund der Erwärmung die organischen Reste der Edukte 46 ausgebrannt, und die Nebenprodukte 58 bestehen aus den organischen Resten oder aus den mittels der organischen Resten gebildeten Verbindungen. Die Nebenprodukte 58 sind dabei aufgrund der Erwärmung flüchtig und/oder werden mittels geeigneter Abführvorrichtungen von der Metallfolie 24 abgeführt. Das Produkt 56 hingegen weist lediglich noch die Bestandteile des Feststoffelektrolyten auf. Der Ofen 55 ist dabei derart eingestellt, dass die Metallfolie 24 sowie die Mischung 50 lediglich auf eine Temperatur unterhalb der Schmelztemperatur der Metallfolie 24 erwärmt wird. Somit bleibt die mechanische Integrität der Metallfolie 24 erhalten und diese weist aufgrund der Behandlung mittels der dritten Komponente 52, mit Ausnahme der Zunahme der Temperatur, im Wesentlichen keine Veränderung auf.

Aufgrund des Einwirkens, nämlich der Erwärmung, wird dabei die Mischung 50, bis die einzelnen Edukte 46 miteinander reagieren und/oder aufgrund der Reaktion der Edukte 46 miteinander in den flüssigen oder pastösen Zustand überführt, sodass auch das Produkt 56 zunächst flüssig/pastös ist. Dieses wird aufgrund der Bewegung mittels der Metallfolie 24 zu einem Rakel 60 verfahren, der in der Bewegungsrichtung der Metallfolie 24 hinter dem Ofen 55 angeordnet ist. Mittels des Rakels 60 wird in einem vierten Arbeitsschritt 62 der flüssige/pastöse Teil der Mischung 50, nämlich das Produkt 46, auf der Metallfolie 24 verteilt. Dabei wird das Produkt 56 entweder vollflächig über die Metallfolie 24 verteilt, oder ein Rand der Metallfolie 24 verbleibt frei von dem Produkt 56, nämlich der Teil der Metallfolie 24, der im Montagezustand mit der Stromschiene 28 elektrisch kontaktiert ist.

Anschließend wird das auf diese Weise auf der Metallfolie 24 verteilte Produkt 56 zu einem Gebläse 63 der dritten Komponente 52 verfahren und mittels dieses in einem fünften Arbeitsschritt 64 mit kalter Luft beaufschlagt wird. Somit wird das Produkt 56 abgekühlt wird.

Infolgedessen wechselt das Produkt 56 in den festen Aggregatszustand und bildet die keramische Schicht 26 aus, die an der Metallfolie 24 anhaftet, und die den Feststoffelektrolyten ausbildet. Somit dient die dritte Komponente 52 dem Einwirken auf die Mischung 50, sodass die Edukte 46 miteinander reagieren und die keramische Schicht 26 ausgebildet wird. Da bei der Herstellung der Feststoffelektrolyten, kein Druck auf das Produkt 46 ausgeübt wird, weist die keramische Schicht 26 keine oder lediglich kleine Poren auf. Auch entstehen keine Defekte oder Brechungen der Symmetrie, wie Korngrenzen, die zu einer Verringerung der Ionenleitfähigkeit führen könnten.

Nachfolgend ist der Feststoffseparators 16 erstellt und wird mittels eines Aufrollers 66 aufgerollt. Alternativ wird das die mittels der keramischen Schicht 26 versehene Metallfolie 24 in einzelne Streifen geschnitten, von denen jeder einen der Feststoffseparatoren 16 bildet. Im Anschluss hieran ist das Verfahren 34 zur Herstellung des Feststoffseparators 16 beendet. Dann wird noch ein sechster Arbeitsschritt 68 des Verfahrens 32 zur Herstellung der Feststoffbatterie 14 durchgeführt. In dem sechsten Arbeitsschritt 68 wird an dem hergestellten Feststoffseparator 16 eine der Kathoden 18 befestigt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Antrieb
- 8: Energiespeicher
- 10: Schnittstelle
- 12: Energiespeichergehäuse
- 14: Feststoffbatterie
- 16: Feststoffseparator
- 18: Kathode
- 20: Stromsammler
- 22: weitere Schicht
- 24: Metallfolie
- 26: keramische Schicht
- 28: Stromschiene
- 30: Gehäuse
- 32: Verfahren zur Herstellung einer Feststoffbatterie
- 34: Verfahren zur Herstellung eines Feststoffseparators
- 36: Vorrichtung zur Herstellung eines Feststoffseparators
- 38: erster Arbeitsschritt
- 40: erste Komponente
- 42: zweiter Arbeitsschritt
- 44: zweite Komponente
- 46: Edukt
- 48: Düse
- 50: Mischung
- 52: dritte Komponente
- 54: dritter Arbeitsschritt
- 55: Ofen
- 56: Produkt
- 58: Nebenprodukt
- 60: Rakel
- 62: vierter Arbeitsschritt
- 63: Gebläse
- 64: fünfter Arbeitsschritt
- 66: Aufroller
- 68: sechster Arbeitsschritt

## Patentansprüche

1. Verfahren (34) zur Herstellung eines Feststoffseparators (16), bei welchem
- eine Metallfolie (24) bereitgestellt wird,
- auf die Metallfolie (24) mehrere Edukte (46) zum Ausbilden einer Mischung (50) aufgebracht werden,
- auf die Mischung (50) eingewirkt wird, sodass die Edukte (46) miteinander reagieren und eine keramische Schicht (26) ausgebildet wird.

2. Verfahren (34) nach Anspruch 1,
**dadurch gekennzeichnet,**
**dass** zum Einwirken die Mischung (50) erwärmt wird.

3. Verfahren (34) nach Anspruch 2,
**dadurch gekennzeichnet,**
**dass** die Mischung (50) lediglich auf eine Temperatur unterhalb eines Schmelzpunkts der Metallfolie (24) erwärmt wird.

4. Verfahren (34) nach einem der Ansprüche 1 bis 3,
**dadurch gekennzeichnet,**
**dass** zumindest ein Edukt (46) ein organisches Salz eines Bestandteils der keramischen Schicht (26) ist.

5. Verfahren (34) nach einem der Ansprüche 1 bis 4,
**dadurch gekennzeichnet,**
**dass** eines der Edukte (46) ein Bestandteil einer eine Flüssigkeit aufweisenden Dispersion ist.

6. Verfahren (34) nach Anspruch 5,
**dadurch gekennzeichnet,**
**dass** die Flüssigkeit derart gewählt ist, dass eine Reaktion mit den Edukten (46) unterbleibt.

7. Verfahren (34) nach einem der Ansprüche 1 bis 6,
**dadurch gekennzeichnet,**
**dass** aufgrund des Einwirkens die Mischung (50) in einen flüssigen oder pastösen Zustand überführt wird.

8. Verfahren (34) nach Anspruch 7,
**dadurch gekennzeichnet,**
**dass** die flüssige oder pastöse Mischung (50) auf der Metallfolie (24) verteilt wird.

9. Verfahren (32) zur Herstellung einer Feststoffbatterie (14), wobei ein Feststoffseparator (16) gemäß einem Verfahren (34) nach einem der Ansprüche 1 bis 8 hergestellt wird, und wobei an dem Feststoffseparator (16) eine Kathode (18) befestigt wird.

10. Vorrichtung (36) zur Herstellung eines Feststoffseparators (16), die eine erste Komponente (40) zur Bereitstellung einer Metallfolie (24), eine zweite Komponente (44) zum Aufbringen von mehreren Edukten (46) auf der Metallfolie (24), sodass eine Mischung (50) ausgebildet wird, und eine dritte Komponente (52) zum Einwirken auf die Mischung (50) aufweist, sodass die Edukte (46) miteinander reagieren und eine keramische Schicht (26) ausgebildet wird, und die gemäß einem Verfahren (34) nach einem der Ansprüche 1 bis 8 betrieben ist.
